# EUROPÄISCHE PATENTANMELDUNG

(11) **EP 1 548 551 A2**
(43) Veröffentlichungstag der Anmeldung: **29.06.2005**
(21) Anmeldenummer: 04090501.0
(22) Anmeldetag: 21.12.2004
(51) Int. Cl.: G06F 3/023

(54) **Verfahren und Vorrichtung zur Eingabe alphanumerischer Zeichen**

(30) Priorität: 23.12.2003 DE 10361479
(71) Anmelder: Volkswagen AG, 38436 Wolfsburg (DE)
(72) Erfinder: Gründer, Christoph, 38124 Braunschweig (DE); Göhler, Dino, 13409 Berlin (DE); Kuhn, Mathias, 14059 Berlin (DE); Hofmann, Robert, 10777 Berlin (DE); Medler, Andreas, 38268 Lengede (DE)
(74) Vertreter: Zucker, Volker, Dipl.-Ing.

(57) **Zusammenfassung**

Die Erfindung betrifft ein Verfahren und eine Vorrichtung zur Eingabe alphanumerischer Zeichen umfassend eine Anzeigeeinheit, auf der Hauptzeichen oder Sonderzeichen darstellbar sind, wobei mittels eines Eingabemittels ein dargestelltes alphanumerisches Zeichen zur Eingabe in ein Infotainment-System auswählbar ist, wobei die Sonderzeichen in mindestens zwei Gruppen eingeteilt sind, wobei die gruppenweise zusammengefassten Sonderzeichen jeweils einem Hauptzeichen zugeordnet sind.

## Beschreibung

Die Erfindung betrifft ein Verfahren und eine Vorrichtung zur Eingabe alphanumerischer Zeichen, insbesondere für Infotainment-Systeme in einem Kraftfahrzeug.

Infotainmentsysteme benötigen eine Eingabemöglichkeit für alphanumerische Zeichen, z.B. um ein Navigationsziel einzugeben oder eine SMS zu schreiben. Hierfür steht in der Regel keine vollwertige Tastatur zur Verfügung. In gängigen Systemen wird deshalb ein (Teil-) Alphabet angezeigt, aus dem der Benutzer ein Zeichen nach dem anderen auswählt.

Bei Systemen mit Touchscreen erfolgt die Auswahl unmittelbar durch Druck auf das gewünschte angezeigte Zeichen. Bei Systemen mit Dreh-Drück-Steller wird mit einem Cursor das gewünschte Zeichen markiert und durch Druck ausgewählt.

Das beschriebene Verfahren funktioniert sehr gut, solange alle auswählbaren Zeichen dem Benutzer übersichtlich präsentiert werden können. Dies hängt von der Größe des Bildschirmes und der Menge der anzuzeigenden Zeichen ab.

Die Menge der anzuzeigenden Zeichen wiederum hängt von der Sprache ab, in der ein Text eingegeben werden soll. Während in Deutsch dem Benutzer mindestens 26 Buchstaben + 10 Ziffern + 4 Umlaute = 40 Zeichen angeboten werden müssen, sind es im Tschechischen beispielsweise 15 statt 4 Umlaute. Hinzu kommen grundsätzlich noch Sonder- und Satzzeichen.

Die Anzahl der darzustellenden Zeichen vergrößert sich abermals drastisch, wenn die Umlaute mehrerer Sprachen gleichzeitig unterstützt werden müssen (z.B. Eingabe eines französischen Straßennamens mit einem auf die Grundsprache Deutsch eingestellten Navigationssystem).

Da die Bildschirmgrößen von Infotainmentsystemen in der Regel nicht ausreichen, um dem Benutzer alle erforderlichen Zeichen parallel anzubieten, erfolgt in gängigen Systemen eine Ebenenumschaltung zwischen dem Hauptalphabet und den Umlauten. Werden von einem Gerät die Umlaute mehrerer Sprachen parallel zur Auswahl angeboten, hat dies zur Folge, dass der Benutzer aus einer Menge von bis zu 50 Zeichen (für westeuropäische Sprachen plus Tschechisch) auswählen muss.

Der Erfindung liegt daher das technische Problem zugrunde, ein Verfahren und eine Vorrichtung zur Eingabe alphanumerischer Zeichen zu schaffen, mittels derer benutzerfreundlich eine Eingabe von Sonderzeichen ermöglicht wird.

Die Lösung des technischen Problems ergibt sich durch die Gegenstände mit den Merkmalen der Ansprüche 1 und 17. Weitere vorteilhafte Ausgestaltungen der Erfindung ergeben sich aus den Unteransprüchen.

Hierzu werden die Sonderzeichen in mindestens zwei Gruppen eingeteilt, wobei die gruppenweise zusammengefassten Sonderzeichen jeweils einem Hauptzeichen zugeordnet sind. Dadurch werden die Sonderzeichen übersichtlich zugeordnet. Dabei kann vorgesehen sein, dass nur ein Sonderzeichen eine Gruppe bildet. Des Weiteren kann auch vorgesehen sein, dass ein Sonderzeichen mehreren Gruppen zugeordnet wird.

Vorzugsweise werden die Hauptzeichen, denen Sonderzeichen zugeordnet sind, graphisch gekennzeichnet. Dies kann beispielsweise durch eine unterschiedliche Farbe geschehen. Vorzugsweise wird dem Hauptzeichen jedoch ein Symbol zugeordnet, anhand dessen der Nutzer erkennt, dass diesem Hauptzeichen Sonderzeichen zugeordnet sind.

In einer weiteren bevorzugten Ausführungsform bleiben bei Auswahl einer Gruppe von Sonderzeichen die Hauptzeichen mindestens teilweise auf der Anzeigeeinheit dargestellt. Hierzu werden beispielsweise die Sonderzeichen unterhalb des Hauptzeichens angeordnet. Sind jedoch eine Vielzahl von Sonderzeichen in einer Gruppe, kann die zeilenförmige Untereinanderreihung der Sonderzeichen zu Platzproblemen auf der Anzeigeeinheit führen.

Daher werden in einer weiteren bevorzugten Ausführungsform die Sonderzeichen gruppenweise in einer Sonderzeichenbox dargestellt, wobei die Sonderzeichenbox entweder unterhalb des Hauptzeichens oder überlappend dargestellt wird.

In einer weiteren bevorzugten Ausführungsform wird auch das Hauptzeichen selbst in der Sonderzeichenbox dargestellt. Allgemeiner kann gesagt werden, dass auch bei anderen Darstellungsformen der Sonderzeichengruppe das zugeordnete Hauptzeichen mit dargestellt wird. Wenn nachfolgend von Sonderzeichenbox gesprochen wird, soll darunter allgemein jedwede geeignete Darstellungsform einer Gruppe von Sonderzeichen verstanden werden.

Zur Auswahl einer Sonderzeichenbox sind verschiedene Verfahrensweisen denkbar. In einer ersten Ausführungsform ist ein separater Taster vorgesehen. Steht dabei der eigentliche Cursor zur Auswahl der Hauptzeichen auf einem Hauptzeichen mit zugeordneten Sonderzeichen, so wird durch Betätigung dieses Tasters die Gruppe von Sonderzeichen ausgewählt. Steht der Cursor hingegen auf einem Hauptzeichen ohne zugeordnete Sonderzeichen, so wird die Betätigung ignoriert bzw. es erfolgt eine "Hilfemeldung", dass zu diesem Hauptzeichen keine Sonderzeichen bestehen.

In einer alternativen Ausführungsform erfolgt die Auswahl über das Hauptzeichen. Wird dann das Hauptzeichen ausgewählt, öffnet sich zunächst die Sonderzeichenbox, in dem auch das Hauptzeichen angeordnet ist, so dass anschließend ein gewünschtes Sonderzeichen oder das Hauptzeichen ausgewählt werden kann. In einer weiteren alternativen Ausführungsform kann die Sonderzeichenbox immer dann geöffnet werden, wenn der Cursor für eine vorbestimmte, vorzugsweise einstellbare Zeitdauer auf dem Hauptzeichen stehen bleibt.

Analog existieren mehrere alternative Vorgehensweisen zum Schließen einer Sonderzeichenbox. Das Schließen kann dabei entweder über einen separaten Taster erfolgen, wobei vorzugsweise zum Öffnen und Schließen der gleiche Taster verwendet wird. Alternativ kann vorgesehen sein, dass, wenn der Cursor eine bestimmte, vorzugsweise einstellbare Zeit auf einem Sonderzeichen verweilt, die Sonderzeichenbox geschlossen wird. In einer weiteren alternativen Ausführungsform wird die Sonderzeichenbox geschlossen, wenn mit dem Cursor über das letzte Sonderzeichen in der Sonderzeichenbox hinweggefahren wird. Weiter kann vorgesehen sein, dass bei Auswahl eines Sonderzeichens die Sonderzeichenbox geschlossen wird. Dabei kann weiter vorgesehen sein, dass die einzelnen Vorgehensweisen miteinander kombiniert werden.

In einer weiteren bevorzugten Ausführungsform sind der Öffnungs- und/oder Schließmechanismus bzw. deren Kombination durch den Nutzer einstellbar. Somit kann sich jeder Benutzer die Bedienung an seine eigenen Präferenzen anpassen.

Weiter kann vorgesehen sein, dass entsprechend einer Wahrscheinlichkeit einer weiteren benötigten Auswahl eines Sonderzeichens die Sonderzeichenbox nach Auswahl eines ersten Sonderzeichens geöffnet bleibt. Ein Beispiel hierfür sind die numerischen Sonderzeichen.

Prinzipiell kann vorgesehen sein, dass beim Öffnen der Sonderzeichenbox der Cursor immer auf dem ersten Sonderzeichen steht, beispielsweise dem Hauptzeichen, wenn dieses auch Bestandteil der Sonderzeichenbox ist. Ebenso ist es denkbar, dass der Cursor immer auf dem letzten ausgewählten Sonderzeichen steht. In einer bevorzugten Ausführungsform ist die Position des Cursors in der Sonderzeichenbox jedoch von der vorangegangenen Bewegungsrichtung des Cursors bei dem Hauptzeichen abhängig.

Hat sich der Nutzer beispielsweise von rechts nach links auf das Hauptzeichen bewegt, so springt der Cursor auf das letzte Sonderzeichen der Sonderzeichenbox. Dadurch bleibt die Drehrichtung bei Verwendung eines Dreh-Drück-Gebers erhalten, d.h. die Bewegung innerhalb der Sonderzeichenbox erfolgt weiter über eine Drehung gegen den Uhrzeigersinn. Entsprechend springt der Cursor auf das erste Sonderzeichen, wenn sich der Cursor von links nach rechts auf das Hauptzeichen bewegt hat.

In einer weiteren bevorzugten Ausführungsform erfolgt die Auswahl und Sortierung der Hauptzeichen sprachenindividuell. Dies kann beispielsweise durch die Festlegung der Gerätesprache erfolgen und/oder aber vom Nutzer einstellbar gestaltet sein, beispielsweise Latein, Griechisch oder Russisch.

In einer weiteren bevorzugten Ausführungsform erfolgt die Auswahl und Sortierung des Inhalts der Sonderzeichenbox sprachenindividuell und/oder nutzerindividuell. So kann beispielsweise der Nutzer von ihm nicht benötigte Sonderzeichen löschen.

In einer weiteren bevorzugten Ausführungsform umfasst die Vorrichtung einen Speller, mittels dessen eine Eingabesequenz mit einer Auswahlliste vergleichbar ist, wobei durch den Vergleich die alphanumerischen Zeichen ermittelbar sind, deren Eingabe aufgrund der vorangegangenen Eingabesequenz erwartet werden kann, wobei nachfolgend nur noch die erwarteten Zeichen auswählbar sind.

Vorzugsweise werden die nicht auswählbaren Zeichen graphisch gekennzeichnet oder nicht dargestellt. Werden die nicht auswählbaren Zeichen graphisch gekennzeichnet, beispielsweise grau unterlegt, so kann bei einer Auswahl mittels eines Cursors vorgesehen sein, dass die nicht auswählbaren Zeichen übersprungen werden. Alternativ kann vorgesehen sein, dass der Cursor zwar auf das Zeichen bewegt werden kann, aber das Zeichen nicht ausgewählt werden kann.

Vorzugsweise ist die Sonderzeichenbox nicht auswählbar, wenn zwar das Hauptzeichen aber kein zugeordnetes Sonderzeichen auswählbar ist.

In einer weiteren bevorzugten Ausführungsform ersetzt mindestens ein auswählbares Sonderzeichen ein nicht auswählbares Hauptzeichen in der Darstellungsebene der Hauptzeichen.

Die Eingabemittel sind beispielsweise als Dreh-Drück-Geber, als Soft-Keys und/oder als Touch-Screen ausgebildet. Ebenso ist die Einbindung einer Spracherkennung möglich.

Bevorzugte Anwendungsgebiete der Erfindung sind die Eingabe alphanumerischer Zeichen in ein Navigationssystem, ein Telefon, Inter- und/oder Intranet-Anwendungen sowie e-mail-Kommunikation.

Die Erfindung wird nachfolgend anhand eines bevorzugten Ausführungsbeispieles näher erläutert. Die Fig. zeigen:
- Fig. 1:: eine Darstellung einer Anzeigeeinrichtung mit einer Darstellungsebene der Hauptzeichen,
- Fig. 2:: eine Darstellung einer Anzeigeeinrichtung mit einer geöffneten Sonderzeichenbox,
- Fig. 3:: eine Darstellung einer Anzeigeeinrichtung mit einer geöffneten Sonderzeichenbox für numerische Zeichen,
- Fig. 4:: eine Darstellung einer Darstellungsebene der Hauptzeichen mit Spellerfunktion und
- Fig. 5:: eine Darstellung einer geöffneten Sonderzeichenbox mit Spellerfunktion.

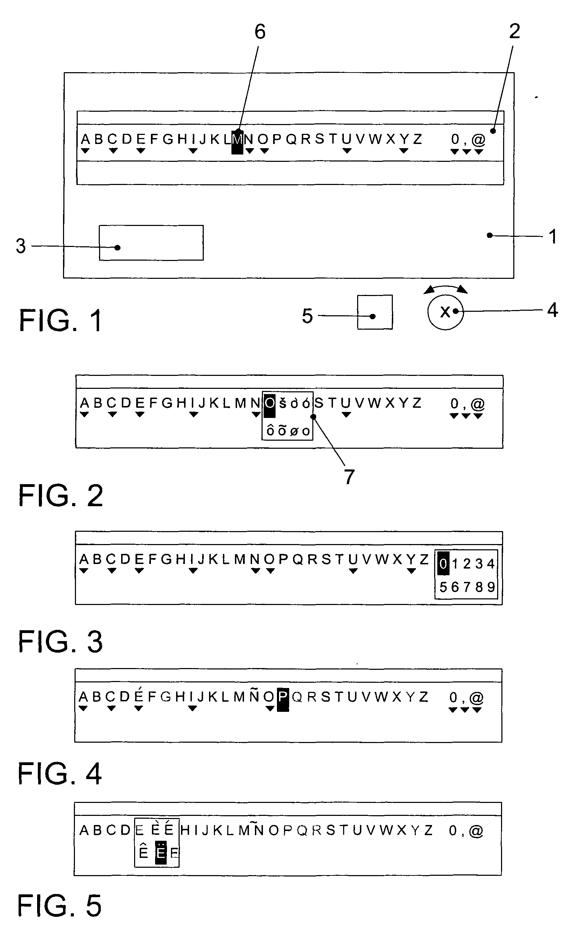

In der Fig. 1 ist eine Anzeigevorrichtung 1 als Bestandteil einer Vorrichtung zur Eingabe alphanumerischer Zeichen dargestellt. Die vorhandenen Zeichen sind unterteilt in Hauptzeichen und Sonderzeichen, wobei die Hauptzeichen in Fig. 1 als Hauptalphabet 2 dargestellt sind. Das Hauptalphabet umfasst die 26 Buchstaben des lateinischen Alphabets, eine Null, ein Komma und das at-Zeichen. Die Sonderzeichen werden gruppenweise zusammengefasst und gruppenweise einem Hauptzeichen zugeordnet. So werden beispielsweise die Ziffern 1-9 als Sonderzeichen dem Hauptzeichen Null zugeordnet. Die vorhandenen Umlaute eines A werden dem Hauptzeichen A zugeordnet, die vorhandenen Umlaute eines C dem Hauptzeichen C und so weiter. Zur Kennzeichnung, dass einem Hauptzeichen Sonderzeichen zugeordnet sind, ist unter diesen Hauptzeichen ein pfeilartiges Symbol angeordnet. Anhand dieses Symbols erkennt der Nutzer, dass zu diesem Hauptzeichen aufrufbare und auswählbare Sonderzeichen existieren. Des weiteren umfasst die Anzeigevorrichtung ein Eingabe-Anzeigefeld 3, in dem die ausgewählten alphanumerischen Zeichen dargestellt werden. Weiter umfasst die Vorrichtung einen Dreh-Drückgeber 4 und eine separate Löschtaste 5. Mittels des Dreh-Drückgebers 4 kann durch Drehung eines Cursors 6 nach links und nach rechts bewegt werden. Durch ein Drücken wird dann eine Enter-Funktion ausgelöst und das Zeichen ausgewählt, auf dem der Cursor 6 gerade steht. Würde im dargestellten Ausführungsbeispiel der Dreh-Drückgeber axial bewegt werden, so würde das Hauptzeichen M ausgewählt und im Eingabe-Anzeigefeld 3 dargestellt werden. Mittels der Löschtaste 5 kann durch einfache Betätigung das letzte ausgewählte Zeichen wieder gelöscht werden. Alternativ kann die Löschfunktion auch in den Dreh-Drückgeber 4 integriert werden, beispielsweise durch ein Doppel-Drücken, ein axiales Hochziehen oder durch eine Menü-Steuerung. Weiter kann der Dreh-Drückgeber 4 auch mit Raststellungen ausgebildet sein. Dabei kann weiter vorgesehen sein, dass die Raststellungen manuell und/oder in Abhängigkeit der zu bedienenden Funktion zu- oder abschaltbar sind.

Wie ausgeführt, werden die Hauptzeichen, denen keine Sonderzeichen zugeordnet sind, durch Drücken des Dreh-Drückgebers ausgewählt. Bei den Hauptzeichen, denen Sonderzeichen zugeordnet sind, erfolgt durch einmaliges Drücken des Dreh-Drückgebers eine Auswahl einer Sonderzeichenbox 7, die dann, wie in Fig. 2 dargestellt, geöffnet wird. Durch die Auswahl der Sonderzeichenbox 7 erfolgt jedoch noch keine Auswahl eines einzelnen bestimmten Zeichens. Wie in Fig. 2 zu erkennen ist, wird in der Sonderzeichenbox 7 auch das zugeordnete Hauptzeichen, dort das O, dargestellt. Mittels des Dreh-Drückgebers 4 kann dann der Cursor 6 in der Sonderzeichenbox 7 bewegt werden und durch Drücken des Dreh-Drückgebers 4 eines der Sonderzeichen oder das Hauptzeichen ausgewählt werden. Nach der Auswahl eines Zeichens schließt sich dann vorzugsweise die Sonderzeichenbox wieder. Die Position des Cursors 6 beim Öffnen bzw. Auswählen der Sonderzeichenbox 7 kann verschiedenartig ausgebildet sein. Beispielsweise kann der Cursor 6 stets auf dem ersten Zeichen, vorzugsweise dem Hauptzeichen stehen oder aber auf dem zuletzt ausgewählten Zeichen. Alternativ kann vorgesehen sein, dass die Position des Cursors 6 in der Sonderzeichenbox 7 von der vorangegangenen Bewegungsrichtung des Cursors 6 im Hauptalphabet 2 abhängig ist. Hat sich der Cursor 6 von links nach rechts bewegt, so springt der Cursor 6 auf das erste Zeichen in der Sonderzeichenbox 7 und bei einer Bewegung von rechts nach links auf das letzte Zeichen in der Sonderzeichenbox. Neben einer Auswahl eines Zeichens kann die Sonderzeichenbox auch durch andere Mechanismen wie beispielsweise längeres Verweilen des Cursors 6 auf einem Zeichen oder das Fortbewegen des Cursors 6 über das erste oder letzte Zeichen hinaus.

Dabei kann auch vorgesehen sein, dass zumindest bei einzelnen Sonderzeichenboxen durch die Auswahl eines Sonderzeichens die Sonderzeichenbox nicht geschlossen wird. Ein Beispiel hierfür sind die numerischen Sonderzeichen, wie sie in Fig. 3 dargestellt sind. Da im Regelfall die numerischen Zeichen für Telefonnummern, Postleitzahlen oder Hausnummern mehrmals hintereinander benötigt werden, bleibt bei diesem nach Auswahl eines Zeichens die Sonderzeichenbox geöffnet. Der Cursor 6 bleibt dabei vorzugsweise auf dem zuletzt ausgewählten Zeichen.

In den Fig. 4 und 5 ist eine Darstellung mit Spellerfunktion dargestellt. Eine Spellerfunktion arbeitet derart, dass eine bereits erfolgte Eingabesequenz mit mindestens einer Auswahlliste verglichen wird, wobei anhand des Vergleichs ermittelbar ist, welche Zeichen als nächstes nur folgen können. Zeichen, die danach nicht folgen können, werden optisch gekennzeichnet und sind nicht auswählbar. Im dargestellten Beispiel gemäß Fig. 4 sind dies beispielsweise die Hauptzeichen G, Q, R und Y. Des Weiteren sind auch die Hauptzeichen E und N nicht auswählbar. Im Gegensatz zu den ersten vier Hauptzeichen, sind jedoch den Hauptzeichen E und N auswählbare Sonderzeichen zugeordnet. Dabei ist dem Hauptzeichen N genau ein auswählbares Sonderzeichen N zugeordnet. Daher wird dieses auswählbare Sonderzeichen Ñ im Hauptalphabet dargestellt. Da dies das einzige auswählbare Zeichen ist, gibt es auch kein Symbol für eine Sonderzeichenbox. Bei dem Hauptzeichen E existieren hingegen mehrere auswählbare Sonderzeichen. Daher wird das erste auswählbare Sonderzeichen E im Hauptalphabet dargestellt und mittels des Symbols für eine Sonderzeichenbox gekennzeichnet, dass noch weitere Sonderzeichen auswählbar sind. Wird nun das neue Hauptzeichen É in Fig. 4 ausgewählt, so öffnet sich die Sonderzeichenbox wie in Fig. 5 dargestellt. Dabei sind die nicht auswählbaren Sonderzeichen E, E und E graphisch gekennzeichnet. Durch die doppelte Verwendung des E wird dem Umstand Rechnung getragen, dass es vorteilhaft sein kann, das Hauptzeichen am Anfang und am Ende darzustellen, wenn die Position des Cursors in der Sonderzeichenbox von der Bewegungsrichtung des Cursors im Hauptalphabet gewählt wird. Der Nutzer kann nun eines der auswählbaren Sonderzeichen É, Ê oder Ë auswählen. Dabei ist weiter anzumerken, dass bei der Spellerfunktion auch eine Umsortierung der Sonderzeichen möglich ist, je nachdem wie groß die Wahrscheinlichkeit für ein Sonderzeichen ist.

## Patentansprüche

1. Vorrichtung zur Eingabe alphanumerischer Zeichen, umfassend eine Anzeigeeinheit, auf der Hauptzeichen oder Sonderzeichen darstellbar sind, wobei mittels eines Eingabemittels ein dargestelltes alphanumerisches Zeichen zur Eingabe in ein Infotainment-System auswählbar ist,
**dadurch gekennzeichnet, dass**
die Sonderzeichen in mindestens zwei Gruppen eingeteilt sind, wobei die gruppenweise zusammengefassten Sonderzeichen jeweils einem Hauptzeichen zugeordnet sind.

2. Vorrichtung nach Anspruch 1, **dadurch gekennzeichnet, dass** die Hauptzeichen, denen Sonderzeichen zugeordnet sind, graphisch gekennzeichnet sind.

3. Vorrichtung nach Anspruch 1 oder 2, **dadurch gekennzeichnet, dass** bei Auswahl einer Gruppe von Sonderzeichen die Hauptzeichen mindestens teilweise auf der Anzeigeeinheit dargestellt bleiben.

4. Vorrichtung nach einem der Ansprüche 1 bis 3, **dadurch gekennzeichnet, dass** die Sonderzeichen gruppenweise in einer Sonderzeichenbox (7) dargestellt sind.

5. Vorrichtung nach Anspruch 4, **dadurch gekennzeichnet, dass** in der Sonderzeichenbox (7) auch das zugeordnete Hauptzeichen angeordnet ist.

6. Vorrichtung nach einem der vorangegangenen Ansprüche, **dadurch gekennzeichnet, dass** die Auswahl einer Sonderzeichenbox (7) über einen separaten Taster oder das Hauptzeichen erfolgt.

7. Vorrichtung nach einem der vorangegangenen Ansprüche, **dadurch gekennzeichnet, dass** das Schließen einer Sonderzeichenbox (7) durch einen separaten Taster, das Fortbewegen eines Cursors (6) über das letzte Sonderzeichen in einer Sonderzeichenbox (7), die Auswahl eines Sonderzeichens und/oder längeres Verweilen eines Cursors (6) auf einem Sonderzeichen erfolgt.

8. Vorrichtung nach einem der Ansprüche 6 oder 7, **dadurch gekennzeichnet, dass** der Öffnungs- und/oder Schließmechanismus einer Sonderzeichenbox (7) vom Nutzer einstellbar ist.

9. Vorrichtung nach einem der vorangegangenen Ansprüche, **dadurch gekennzeichnet, dass** die Position eines Cursors (6) innerhalb einer geöffneten Sonderzeichenbox (7) abhängig von der vorangegangenen Bewegungsrichtung des Cursors (6) bei den Hauptzeichen ist.

10. Vorrichtung nach einem der vorangegangenen Ansprüche, **dadurch gekennzeichnet, dass** die Auswahl und Sortierung der Hauptzeichen sprachenindividuell ausgebildet ist.

11. Vorrichtung nach einem der vorangegangenen Ansprüche, **dadurch gekennzeichnet, dass** die Auswahl und Sortierung des Inhalts der Sonderzeichenbox sprachenindividuell und/oder nutzerindividuell einstellbar ausgebildet ist.

12. Vorrichtung nach einem der vorangegangenen Ansprüche, **dadurch gekennzeichnet, dass** die Vorrichtung einen Speller umfasst, mittels dessen eine Eingabesequenz mit einer Auswahlliste vergleichbar ist, wobei durch den Vergleich die alphanumerischen Zeichen ermittelbar sind, deren Eingabe aufgrund der vorangegangenen Eingabesequenz erwartet werden kann, wobei nachfolgend nur noch die erwarteten Zeichen auswählbar sind.

13. Vorrichtung nach Anspruch 12, **dadurch gekennzeichnet, dass** die nicht auswählbaren Zeichen graphisch gekennzeichnet oder nicht dargestellt sind.

14. Vorrichtung nach Anspruch 13, **dadurch gekennzeichnet, dass** bei einem auswählbaren Hauptzeichen, aber nicht auswählbaren, dem Hauptzeichen zugeordneten Sonderzeichen, die Sonderzeichenbox nicht auswählbar ist.

15. Vorrichtung nach Anspruch 13 oder 14, **dadurch gekennzeichnet, dass** bei einem nicht auswählbaren Hauptzeichen, aber mindestens einem auswählbaren, dem Hauptzeichen zugeordneten Sonderzeichen, mindestens ein auswählbares Sonderzeichen das nicht auswählbare Hauptzeichen in der Darstellung der Hauptzeichen ersetzt.

16. Vorrichtung nach einem der vorangegangenen Ansprüche, **dadurch gekennzeichnet, dass** die Eingabemittel als Dreh-Drückgeber (4), als Soft-Keys und/oder als Touch-Screen ausgebildet sind.

17. Verfahren zur Eingabe alphanumerischer Zeichen, mittels einer Anzeigeeinheit, auf der Hauptzeichen und Sonderzeichen dargestellt werden, wobei mittels eines Eingabemittels ein dargestelltes alphanumerisches Zeichen zur Eingabe in ein Infotainment-System auswählbar ist,
**dadurch gekennzeichnet, dass**
die Sonderzeichen in mindestens zwei Gruppen eingeteilt und die Gruppen jeweils einem Hauptzeichen zugeordnet werden.

18. Verfahren nach Anspruch 17, **dadurch gekennzeichnet, dass** die Hauptzeichen, denen Sonderzeichen zugeordnet sind, graphisch gekennzeichnet werden.

19. Verfahren nach Anspruch 17 oder 18, **dadurch gekennzeichnet, dass** bei Auswahl einer Gruppe von Sonderzeichen die Hauptzeichen mindestens teilweise auf der Anzeigeeinheit dargestellt bleiben.

20. Verfahren nach einem der Ansprüche 17 bis 19, **dadurch gekennzeichnet, dass** die Sonderzeichen gruppenweise in einer Sonderzeichenbox (7) dargestellt werden.

21. Verfahren nach Anspruch 20, **dadurch gekennzeichnet, dass** in der Sonderzeichenbox (7) auch das zugeordnete Hauptzeichen angezeigt wird.

22. Verfahren nach einem der Ansprüche 17 bis 21, **dadurch gekennzeichnet, dass** die Auswahl der Sonderzeichenbox (7) über einen separaten Taster oder das Hauptzeichen erfolgt.

23. Verfahren nach einem der Ansprüche 17 bis 22, **dadurch gekennzeichnet, dass** das Schließen einer Sonderzeichenbox (7) durch einen separaten Taster, das Fortbewegen eines Cursors (6) über das letzte Sonderzeichen in einer Sonderzeichenbox (7) und/oder längeres Verweilen eines Cursors (6) auf einem Sonderzeichen erfolgt.

24. Verfahren nach einem der Ansprüche 17 bis 23, **dadurch gekennzeichnet, dass** der Öffnungs- und/oder Schließmechanismus einer Sonderzeichenbox (7) vom Nutzer eingestellt werden kann.

25. Verfahren nach einem der Ansprüche 17 bis 24, **dadurch gekennzeichnet, dass** die Position eines Cursors (6) innerhalb einer geöffneten Sonderzeichenbox (7) abhängig von der vorangegangenen Bewegungsrichtung des Cursors (6) bei den Hauptzeichen ist.

26. Verfahren nach einem der Ansprüche 17 bis 25, **dadurch gekennzeichnet, dass** die Auswahl und Sortierung der Hauptzeichen sprachenindividuell ausgebildet ist.

27. Verfahren nach einem der Ansprüche 17 bis 26, **dadurch gekennzeichnet, dass** die Auswahl und Sortierung des Inhalts der Sonderzeichenbox (7) sprachenindividuell und/oder nutzerindividuell einstellbar ausgebildet ist.

28. Verfahren nach einem der Ansprüche 17 bis 27, **dadurch gekennzeichnet, dass** mittels einer Spellerfunktion eine Eingabesequenz mit einer Auswahlliste verglichen wird, wobei durch den Vergleich die alphanumerischen Zeichen ermittelt werden, deren Eingabe aufgrund der vorangegangenen Eingabesequenz erwartet werden kann, wobei nachfolgend nur noch die erwarteten Zeichen auswählbar sind.

29. Verfahren nach Anspruch 28, **dadurch gekennzeichnet, dass** die nicht auswählbaren Zeichen graphisch gekennzeichnet oder nicht dargestellt werden.

30. Verfahren nach Anspruch 29, **dadurch gekennzeichnet, dass** bei einem auswählbaren Hauptzeichen, aber nicht auswählbaren, dem Hauptzeichen zugeordneten Sonderzeichen, die Sonderzeichenbox (7) nicht auswählbar ist.

31. Verfahren nach Anspruch 29 oder 30, **dadurch gekennzeichnet, dass** bei einem nicht auswählbaren Hauptzeichen, aber mindestens einem auswählbaren, dem Hauptzeichen zugeordneten Sonderzeichen, mindestens ein auswählbares Sonderzeichen das nicht auswählbare Hauptzeichen in der Darstellung der Hauptzeichen ersetzt.
